Europäisches Patentamt

European Patent Office

Office européen des brevets

(11) Publication number: **0 182 675**
**B1**

## EUROPEAN PATENT SPECIFICATION

(45) Date of publication of patent specification: **10.10.90**

(51) Int. Cl.⁵: **B 41 B 19/00**

(21) Application number: **85308518.1**

(22) Date of filing: **22.11.85**

(54) **Photocomposition method and machine.**

(30) Priority: **23.11.84 GB 8429629**

(43) Date of publication of application:
**28.05.86 Bulletin 86/22**

(45) Publication of the grant of the patent:
**10.10.90 Bulletin 90/41**

(84) Designated Contracting States:
**CH DE FR GB IT LI NL SE**

(56) References cited:
**EP-A-0 056 334
EP-A-0 075 046
EP-A-0 123 425
US-A-3 863 262**

**APPLIED OPTICS, vol. 14, no. 8, August 1975,
pages 1866-1873; New York, US J.T. GUTCHEN
ET AL.:"PLZT Electrooptic shutters:
Applications"**

(73) Proprietor: **Moulin, Michel
Versitec S.A. 7 Rue de Lausanne
CH-1020 Renens (CH)**

(72) Inventor: **Moulin, Michel
Versitec S.A. 7 Rue de Lausanne
CH-1020 Renens (CH)**

(74) Representative: **Jack, Bruce James et al
FORRESTER & BOEHMERT Widenmayerstrasse
4/I
D-8000 Munchen 22 (DE)**

(56) References cited:
**LASER FOCUS/ELECTRO-OPTICS, vol. 19, no.
10, October 1983, pages 101-109; Newton,
Mass., US R.A. SPRAGUE et al.: "Advances in
laser and E-O printing technology."**

**PATENT ABSTRACTS OF JAPAN, vol. 7, no. 231,
(P-229)(1376), October 13, 1983**

Courier Press, Leamington Spa, England.

EP 0 182 675 B1

## Description

This invention relates generally to photocomposition. More particularly this invention relates to full page composition produced one line at a time.

Photocomposing machines ("photocomposers") can be generally classified as follows: First generation (from 1950 to 1955) machines derived from hot metal machines, short-lived and not presently used. Second generation (from 1954 to 1982) machines based on a continuously moving matrix provided with transparent characters on an opaque background. More than 120,000 machines of this class were built and most are still being used but, to the best of Applicant's information, no new machine of this configuration is presently being developed. Third generation (from 1970 to date) machines based on a cathode ray tube (CRT) for the generation of characters stored in digital form. These machines are considerably faster than second generation machines and can produce graphics, but are substantially more expensive. Fourth generation (from the early eighties to date) machines based on the use of laser light and raster imaging. These machines are mostly utilized as output printers based on electrophotographic technology and are not currently producing an output image of good typographic quality, with the exception of one machine outputting text and graphics on a photosensitive material (film or paper). However, the cost of this machine is much too high to penetrate the largest segment of the present market. Another disadvantage of present day fourth generation photocomposers using raster imaging is that the text must be completely made-up to obtain the benefits of the technology: thus the first scan takes the uppermost points of every character of a line, the second scan projects the next spot, and so on. The number of scans required is determined by the spot size desired, which in turn depends on the final resolution to be obtained on the photo-media. High resolutions are necessary to accurately reproduce high quality typographic characters, but the amount of memory needed (to store raster image information in advance, for one or several lines) increases as the square of the number of scan lines, as does the necessary processing speed of the electonic controllers.

All the "raster" photocomposers presently available, that the Applicant is aware of, utilise a rotating multi-facet polygonal mirror to scan a spot-forming beam from a laser across a photosensitive surface. Such machines require relatively large amounts of computer memory and relatively high computing speeds to store and retrieve the data needed for acceptable composition. Such machines also require observance of stringent mechanical and optical tolerances. For example, there is the mechanical problem associated with the wobbling of the rotating polygon, the need for accuracy of the polygon reflecting facets, such as in the facet pitch angle, and the need to avoid facet-to-facet errors and facet-to- spin axis errors, and other mechanical considerations. The optical problems to be dealt with are no less serious and costly as they considerably increase (maybe to the fourth power) as the length of line of text increases. Various means have been proposed to resolve or attenuate these problems, such as lenses of special design to ensure a flat field and a linear relationship between the angular displacement of the polygon reflected beam and the focussed spot in the flat image field and also to avoid increasing the size of the spot as it approaches the ends of the text line. Other means, such as toroidal lenses, curved mirrors and the like have been proposed. Another fourth generation machine based on a series of acousto-optic deflectors includes complicated and expensive components. Other machines using rotating polygonal mirrors in combination with different modulation means have also been proposed, an example being disclosed in EP—A—0123425.

One objective of the invention is to provide a photocomposing method and a photocomposing machine of the fourth generation having high versatility, speed and productivity and very good to excellent composition quality to faithfully repoduce original type designs, and yet having a relatively low manufacturing cost.

Another objective of the invention to provide such a machine which is compact enough to fit onto the top of an ordinary desk.

Further objectives of the invention are to provide such a method and machine which can be an adjunct to existing micro-computers with appropriate interface and software for office environments: and to provide such a method and machine in which a high level of light intensity is available to produce photocomposed text (and graphics) on a variety of photosensitive recording media such as silver halide film or paper, zinc oxide plates or paper or even plain paper, making practicable the realization of the "computer-to-printing plate" concept.

Yet more objectives of the invention are to provide a simple mechanism capable of producing long lines of textual or pictorial elements from a bundle of light rays remaining close to the optical axis of the imaging optical system regardless of the length of lines; to provide a machine in which very few adjustments need to be made manually in order to keep the quality of the output at a relatively high level; and to provide a compact photocomposing machine with very few moving parts yet capable of producing long lines of text of constant quality from one end to the other with simple optical means.

With these and other objectives in view, the invention consists in the methods machines and structures defined in the appended claims.

The invention is further explained and described with reference to the accompanying drawings, in which:

Figure 1 represents schematically a known principle that is utilized in the present invention in a new manner;

Figure 2 is a simplified, partially schematic perspective view of the preferred photographic unit of a photocomposing machine constructed in accordance with the invention;

Figure 3 illustrates the gradual formation of a character on the photosensitive media;

Figure 4 is a partial section in a first plane of the preferred optical system;

Figure 5 is a partial section in a second plane, perpendicular to the first, of the preferred optical system;

Figure 6 schematically represents the optical components used to produce an expanded, asymetrical and elongated laser beam;

Figure 7 is a cross-section of the expanded beam;

Figure 8 represents the spacial light modulator assembly;

Figure 9 is an enlarged view of a portion of Figure 8;

Figure 10 is a plan view of the light modulator assembly and its controls in schematic form;

Figure 11 illustrates the shape of the ribbon-like light bundle entering the light shutter assembly and the reflected modulated light ribbon;

Figure 12 represents an arrangement of the electrodes defining individual coterminous elementary areas located on the light modulator;

Figure 13 illustrates one advantage of the electrode arrangement shown in Figure 12;

Figure 14 represents another arrangement of electrodes, known in the art;

Figure 15 shows one of the defects of the arrangement of Figure 14;

Figure 16 represents a "print dot" obtained from the arrangement of Figure 14;

Figure 17 represents the shape of a "print dot" obtained with the improved arrangement of Figure 12;

Figure 18 represents another preferred arrangement of the controlling electrodes;

Figure 19 is a block diagram of the electronic controls;

Figure 20 is a more detailed diagram of the electronic controls;

Figure 21 represents parts of the carriage supporting the moving optical system; and

Figure 22 schematically shows the moving carriage with the optical and pulse generating components.

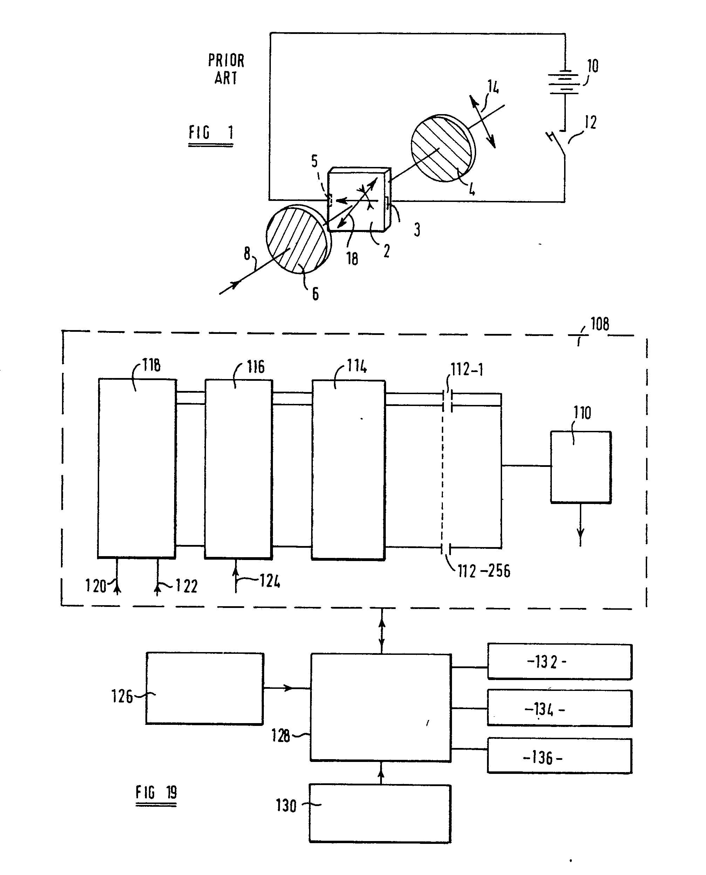

Figure 1 of the drawings generally illustrates one of the principles used in the present invention. A wafer of material with electro-optic properties is shown at 2. In the present preferred embodiment an elongated wafer of lanthanium-modified lead zirconate titanate (PLZT) is utilized. This particular kind of ceramic, discovered at Sandia Laboratories, is particularly suited as the basis of the elongated gate-array described hereunder.

Briefly stated, referring to Figure 1, a beam of light 8 emerging from an unpolarized light source (not shown), is polarized in plane 18 by a polarizer 6, traverses the transparent ceramic wafer 2 without being subjected to a change of polarization and is blocked by a second crossed polarizer 4. The wafer 2 is provided with two opposite electrodes 3 and 5. When a voltage is applied to the electrodes, in order to create a field through the wafer, by a source 10 through switch 12, the wafer acts as an optical retarder, shifting the relative phases of light polarized parallel and perpendicular, respectively, to the applied field. With the appropriate electric field, the wafer behaves as a half-wave retardation plate. The light is still linearly polarized when it leaves the wafer but the plane of polarization is rotated by 90 degrees (from plane 18 to plane 14) and is practically unaffected by the presence of the second polarizer 4. (See "PLZT Electrooptic shutters" — Applied Optics, Vol. 14, page 1866, August 1975). Applicant has built upon this basic system to provide a practical and relatively inexpensive device.

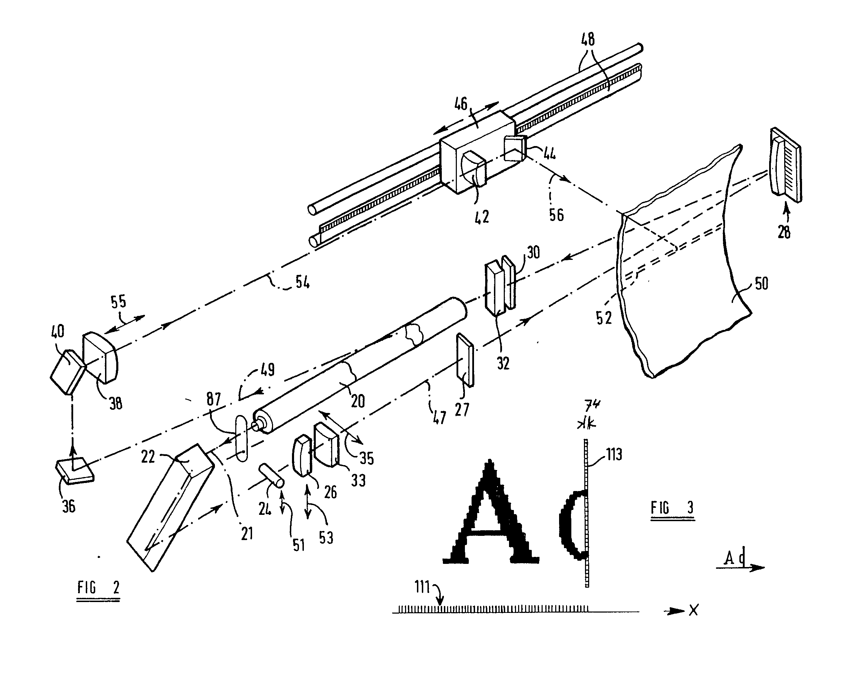

In order to facilitate the understanding of the following description and as represented in Figure 2: by "vertical plane" I mean the plane substantially perpendicular to the axis of cylindrical lens 24 and parallel to light beam 21; and by "horizontal plane", I mean the plane perpendicular to the above, approximately defined by light rays 54, 56 and the image 52 of a line projected on film 50. Other terms used herein are to be understood to have meanings as follows:

"Segmented light shutter unit" means a light modulator provided with electrodes associated with an output polarizer.

The word "film" encompasses any photosensitive receptor such as silver halide paper or film, zinc oxide paper or plate, selenium covered material of any form and electro-photographic surfaces.

"Scan line" means a very thin luminous light ray less than 0.025 to 0.050 mm (one thousandth to two thousandths of an inch) traversing the film from one margin to the other or the beginning of a colum of text or graphics from one end to the other.

"Text line" means one line of text, usually comprised of alphanumeric or ideographic character images.

"Multiple scan lines" refers to a multiplicity of individual scan lines, independently modulated and emerging substantially simultaneously from the segmented light shutter unit and traversing the film in one single sweep. Depending on the number of individual scan lines, the sweep is also referred to as "narrow" or "wide brush". The word "beam" generally means a bundle of light rays. "Gate" means an elementary area of an electrooptic shutter where incident linearly polarized light may have its plane of polarization rotated under the influence of an electric field. "Modulated bundle" means a bundle of light rays emerging from the selectively energized light shutter assembly.

"Coterminous elementary areas" are small substantially elongated spots located on the electrooptic modulator and arranged along a column without any gap between adjoining spots and preferably slightly overlapping, so that the image of several consecutive spots is a continuous vertical line.

The major components of the photocomposer are shown in Figure 2. In this schematic representation, the light source is represented by a He-Ne laser 20 producing a constant polarized narrow beam of light 21 which is deflected approximately 180 degrees by retro-reflector prism 22. The beam emerging from the prism crosses cylindrical lens 24 which, in association with cylindrical lens 26 of smaller convergence produces an elongated wide ribbon-like beam of light parallel to the vertical plane as defined above and slightly diverging in the horizontal plane under the action of cylindrical lens 33 for reasons explained hereunder. From lens 33 the now shaped beam of light is directed to modulator assembly 28 comprising a mirror surface from which it bounces back to enter polarizer 30 which will block a selected number of light rays corresponding to unactivated elementary areas of the modulator as explained hereunder. The beams of light emerging from polarizer 30 enter a cylindrical lens 32 and are deflected by mirrors 36 and 40 toward a spherical lens 38.

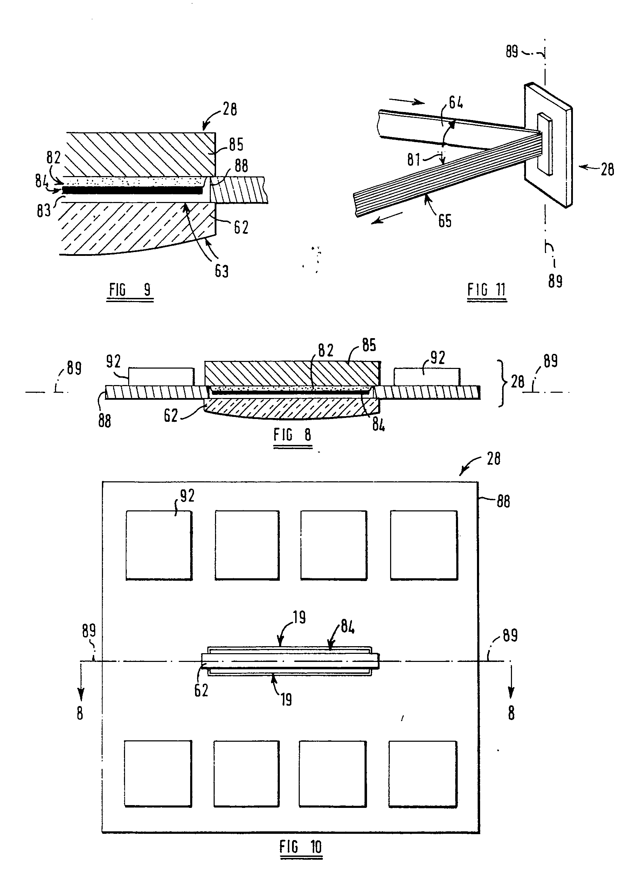

Lens 32, being cylindrical, has no effect on the rays parallel to the vertical plane, but lens 38, located at an optical distance from the modulator 84 (see Figures 8, 9 and 11) equal to its focal length, produces collimated rays shown at 54 (Figure 2) which reach an imaging spherical lens 42 attached to a sliding carriage 46 and cooperating with a mirror 44 also attached to said carriage moving along a path defined by rails 48 at a distance from film 50 determined so that lens 42 makes an image 52 on said film, as shown in the Figure. Carriage 46 preferably produces one line of text in one direction and another when it reverses its motion to move in the opposite direction.

Figure 3 represents, on the left side, the gradual formation of character "A" and a portion of character "O" as successive elementary areas of the PLZT column shown at 113 are energized in synchronism with pulses ттт produced by the displacement of carriage unit 46. Of course, an observer looking at unit 28 through crossed polarizer 30 would just see a vertical column of luminous dots continually changing in length and/or intensity, and characters would only appear if said observer were rapidly moving his head in a horizontal direction. The right hand side of Figure 3 represents the actual result on the film of the same characters, after reduction by the optical system of Figure 2.

A mechanical shutter schematically shown at 87 is moved into active position to intercept beam 21 during relatively long periods between successive operations of the photocomposer.

Although the use of a polarized laser is preferred, an additional polarizer 27 is located at the output of the shaped beam forming optics in order to correct any change of polarization introduced by the passage of light through said optics.

The travelling carriage system shown in Figure 2 is known in the art (see, e.g. US—A—2670665 and US—A—3863862), but the unique optical arrangement described hereunder makes it possible to utilize small optical components in the carriage, thus decreasing its size and weight and making it possible to move it at a high speed along the rails, particularly as it moves in a continuous fashion, first in one direction, then in the opposite direction. Another point of importance concerning the present invention is the fact that the production speed, expressed in lines per minute, can be higher for shorter lines than for ling lines because the carriage displacement can be made dependant on the length of the lines of text which is not the case in systems utilizing a continuously rotating multifacet polygon which must cause the light beam to traverse the maximum length of line that can be obtained, regardless of the actual length of line to be created.

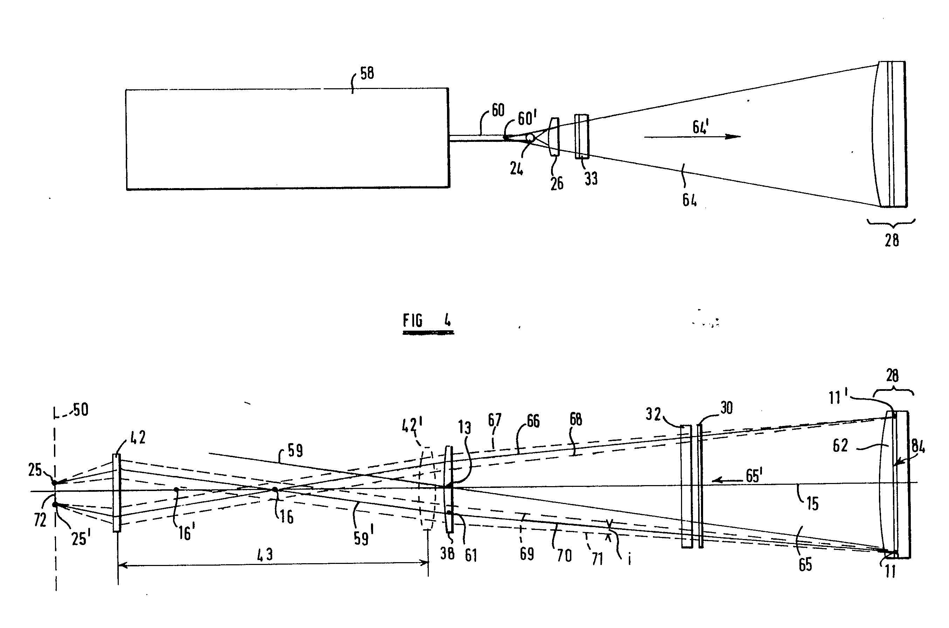

A schematic cross section in the vertical plane of the optical system is shown in Figure 4. In this Figure, box 58 represents the source of polarized light containing a laser and other components necessary to obtain a polarized narrow beam 60. This beam is first modified by a small short-focal cylindrical lens 24. The rays emerging from the first lens enter a second converging cylindrical lens 26 to form a tapered relatively flat light bundle 64. Any crossing twice part 28 of the light shutter unit, as explained in detail hereunder in relation with Figure 9, the light bundle 65 located in the vertical plane contains all the necessary information to produce one vertical slice of a character. It then proceeds downstream of unit 28, crosses polarizer 30 and cylindrical lens 32 which has practically no effect on the light rays of the vertical plane and is folded back by mirrors 36 and 40. Now the modulated bundle goes through spherical collimating lens 38 before reaching the travelling lens 42 which can project onto the photosensitive media 50 a vertical column (formed of a number of on-or-off spots) shown at 72. The individual components of the optical system upstream of lens 38 are so selected and spaced that bundles of parallel light beams emerge from lens 38. As will be explained later in the present embodiment of the invention a narrow light column such as 113 (Figure 3) and 72 (Figure 4) is formed by projection of 256 gates turned on or off as explained in relation with Figure 1.

Because of their size and configuration, the gates of the electrooptic shutter diffract the incident light. The three most significant rays are shown in Figure 4. The light rays 66, 67 and 68 represent the zero, plus one and minus one orders of the diffracted light coming from the uppermost gate of the linear array. Likewise, rays 70, 71 and 69 represent rays emerging from the lowest gate.

As shown in the drawing all these rays are utilized to form an image of the photosensitive surface. An important aspect of the invention resides in the judicious choice of the optics affecting the rays located in the vertical plane so that, as shown, a relatively small travelling lens 42 can be utilized to produce long lines (more than 840 mm or 200 picas) without loss of light or loss of parts of the light beams. This is quite contrary to the system commonly used in second generation machines (see, e.g., US—A—2670665) in which the light rays emerging from a collimating lens diverge rather rapidly, limiting the maximum length of line and/or the maximum size of characters. The maximum length of line, as defined by the distance travelled by lens 42 (from 42') is shown at 43.

The method by which such long lines can be obtained will now be explained with reference to Figure 4. It is assumed that the optical system upstream of assembly 28 has been determined to obtain a substantially uniform and dimensionally acceptable light patch to cover the gates of the columnar assembly 28. The only component of assembly 28 which may be affected by the maximum length of line desired is the optical length of field lens 62. The "home" or initial location of imaging carriage lens 42 is first determined. This location, shown at 42' in the Figure should be as close to collimating lens 38 as possible. Then, the extreme location of lens 42, shown in solid lines in the Figure, is determined from the maximum length of line desired, represented by distance 43. Point 16, on optical axis 15 is located at the middle of the maximum travel of lens 42. Now, going back to the gates assembly represented at 84, the two extreme gates are represented by reference numbers 11 and 11'. These extreme gates will be projected at points 25 and 25' of the final image 72. The principal central point 13 of collimating lens 38 and gate 11 can be connected by a line 59 which gives the orientation of all the collimated light rays emerging from gate 11 which behaves somewhat like a restricted light source. Now, from point 16, a line 59' is traced, parallel with line 59, which intersects the principal plane of lens 38 at point 61. Line 70, connecting this point 61 to gate 11 represents the zero order path of the emerging diffracted rays. The prolongation of said line 70 beyond point 61, not shown in the Figure for clarity's sake, intersects the optical axis at point 16' which represents the virtual imaging point of the rays entering assembly 28. Although a graphical representation only of the optical path of some extreme rays has been shown, it is clear that, for a maximum length of line 43, known location of gate 11, known focal length of collimating lens 13 and the clearing space between said collimator and lens 42 at home position 42', and the optical characteristics of lens 38, the location of point 16' can be determined by simple mathematics. The distance measured from this point to lens 62 and the configuration of the optics located upstream of said lens determine its focal length which is dependent, as shown, on the maximum length of line but does not substantially affect light rays emerging from the gates assembly for which it behaves as a field lens.

The path followed by the plus one and minus one orders of the diffracted light are shown in the Figure by interrupted lines 69 and 71 for gate 11. The angle "i" formed between the zero order ray and the first order diffracted ray can be computed from the well known formula: $\sin i = \lambda/d$ in which "$\lambda$" is the wave length of the light and "$d$" is the pitch of the parallel column of gates of assembly 84. Thus, the angle of diffracted rays of the first order being known, these rays can be traced and their exact impact on the principal plane of carriage imaging lens 42' can be computed to determine the clear aperture of said lens.

It is important to point out that all the rays emerging from the gates assembly converge to a "waist" located on a plane perpendicular to the optical axis at point 16. Thus, contrary to any system described in the prior art, the light rays emerging from the imaging lens do not continuously diverge, but converge to a point located at mid-course of the maximum travel of said lens, from which they diverge again as shown in the Figure. The above described configuration makes it possible to use a relatively small and light imaging lens which enables the projection of long lines at great carriage speed for a relatively small cost.

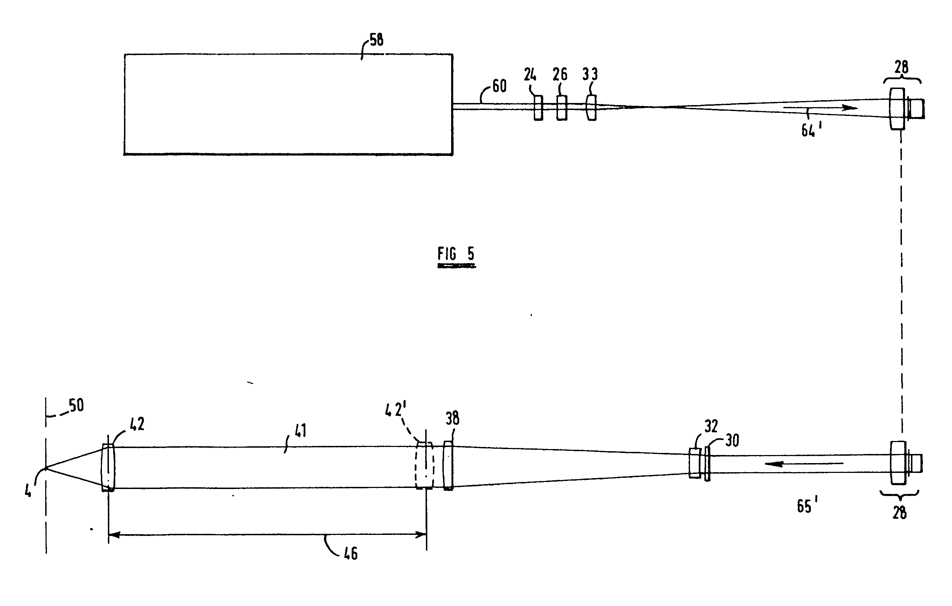

Figure 5 is similar to Figure 4 except that it schematically represents the optics in the horizontal plane. The same reference numbers represent the same components as in Figure 4. After bouncing back from modulator assembly 28 (lowest part of the Figure) the reflected light goes through diverging cylindrical lens 32 and converging spherical lens 38. In the plane of the Figure these two lenses constitute a "flat" telescope (that is, one affecting rays located in one plane only) whose output is a parallel bundle of light beams as shown at 41. Travelling lens 42 produces, again in the plane of the Figure, a tiny point or dot on the photosensitive media 50, as represented at 74. This point, in the embodiment shown is of the order of 20 microns.

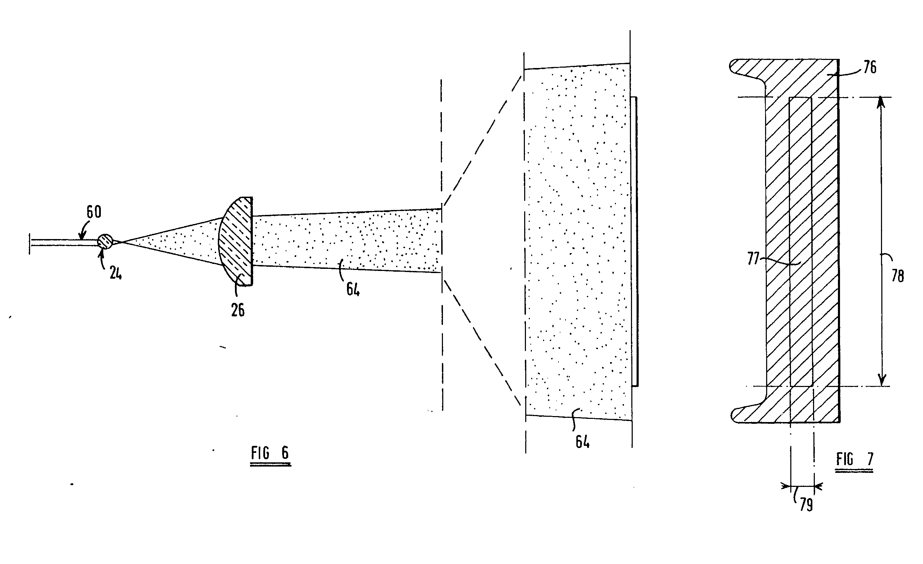

Going back to the vertical plane, the bundle of rays emerging from lens 24 and 26 is shown at an enlarged scale in Figure 6. It has been experimentally found that through the judicious selection of simple cylindrical lenses, the uncorrected aberrations contribute to the formation of an elongated patch of light as shown in Figure 7, with an area of substantially uniform illumination, shown at 77 in Figure 7. The height 78 of this area is somewhat more than is necessary to cover the linear array of gates, as is its width 79.

It is important to point out that the column forming rays located in the vertical plane and the point forming rays located in the horizontal plane are subjected to quite different optical treatments. In the vertical plane, the diverging "flat" fanning out light rays 64 (upper part of Figure 4) after twice crossing lens 62 (Figure 9) converge to make an image of the virtual light source 60' at 16'. All the light rays emerging from a gate such as 11, except diffracted rays of second order and higher which carry very little light, are channelled to lens 42. If the gate were replaced, for example by a light emitting diode, the emerging rays would considerably diverge and lens 42 would not be capable of capturing enough light rays to produce long lines, particularly as it moves away from its home position.

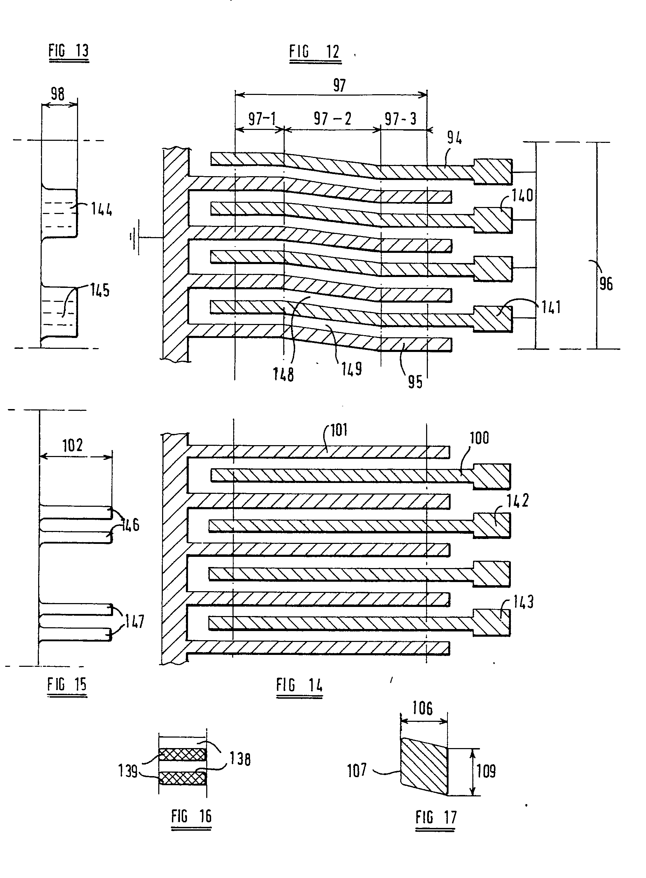

In the horizontal plane, the narrow bundle of rays 60 emerging from the laser 58 are first slightly spread out by cylindrical lens 33 to increase the width of the elongated light patch in order to cover the width 97 (Figure 12) of the gates assembly. The rays 65 emerging from unit 28 are spread out further in said horizontal plane by cylindrical lens 32 whose purpose is to increase the width of the bundle of light rays so that when they exit collimating lens 38 their width 41 is sufficient to produce a very small point 4 whose size, as is well known in the art, is proportional to the focal length of imaging lens 42 and inversely proportional to width 41 for a given wave length of the light.

The purpose of the optics affecting the light rays of the vertical plane is to make an image of the gates unit whereas the optics affecting the rays of the horizontal plane only determine the size and quality of the laser beam as it emerges from said optics.

An important characteristic of the invention concerns the path followed by the light-bar forming rays. It has already been stated that rays go twice through the lens 62, whose focal length is such that the gate array wafer 84 adjoining the lens is located in the focal plane of the optical arrangement of Figures 4 and 5. Because of the capacitance of the PLZT elemental gates they should normally be operated by a so-called "totem pole" circuit in order to obtain a fast response. However, these circuits are relatively expensive and consequently they are to be avoided in a low-cost machine, such as is the objective of the present invention. Consequently the present arrangement utilizes integrated circuits, as schematically shown at 92. However, in the present state of the art these circuits cannot produce the voltage which is necessary to rotate the polarization plane by 90 degrees. If this condition is not obtained, the light output of a ceramic wafer (PLZT) traversed in a single direction is quite limited. According to an important feature of preferred embodiments of the invention, the character-segments forming light twice crosses the ceramic wafer, as shown in Figure 11, in order to rotate the polarized plane by an acceptable amount. In this Figure, the ribbon-shaped light beam enters the gates assembly along path 64 and exits along path 65.

The gates assembly is reprsented in Figures 8 to 10. The components shown in Figures 8 and 10 are approximately full size while Figure 9 is an enlarged portion of Figure 8, as seen in the vertical plane. Referring to Figure 9, both outside surfaces of the sectional lens 63 are covered with an antireflection coating of appropriate composition for the characteristics of the traversing light. The lens is attached at both ends of its sectional surface to printed circuit support 88.

An air gap 83 is left between the flat surface of the plano-convex lens segment and the PLZT wafer shown at 84. The surface of said wafer facing the lens is also covered with the appropriate antireflection coating. Its opposite surface is provided with the controlling electrodes and is attached to a front surface mirror 85 by a coating of appropriate gel 82.

In Figures 8 and 10, reference numbers 92 represent the driving integrated circuits. An opening provided into the supporting plate is shown at 19, and the PLZT at 84.

Thus the light entering the assembly 28 goes twice through the PLZT (ceramic) wafer, the first time along path 64 to cross the lens 62 once, then through the wafer 84, the gel coat 82, the reflecting surface of mirror 85 to be returned along a path slightly angled relative to the entering path but substantially going through the same elementary area of the PLZT, then proceeding through the lens segment 62 to emerge along path 65 forming an angle 81 with the entering rays. The exiting rays, as explained before, go through the polarizer 30 which completes the shutter unit and thence through the collimating optics of Figures 2, 4 and 5.

The controlling electrodes located on the PLZT as shown in Figures 12 to 18 are very small and are preferably produced by photolithography.

In the arrangement of Figure 14, it may be understood that electrodes can be on the path of the emerging light. If, for example, electrodes 142 and 143 are energized to "open" associated half-windows, the emerging light will appear as illustrated in Figure 15, which shows two light peaks 146—147 for each electrode with an obscured zone between. The final result on the photosensitive media will be a spot, schematically shown in Figure 16, comprised of two "light" spots 139 with two "dark" spots 138. It is a feature of preferred embodiments of the invention to provide electrodes shaped and located as shown in Figure 12. Each electrode, having a useful length represented by 97, is composed of two equal length horizontal sections, 97-1 and 97-3, separated by a slanted section 97-2 approximately twice the length of equal length sections 97-1 and 97-3 so that the light going through the "opened" gates such as the white area adjacent to electrodes 140 and 141 is approximately of the shape shown in Figure 13. If 98 illustrates the amount of light, it can be noticed that, compared to Figure 14, the total amount of light, represented by areas 144 and 145, is equal to the total amount represented by areas 146 and 147 of Figure 15. The difference is that the light is more uniform in the case of the electrode arrangement of Figure 12. Figure 17 represents (approximately) one dot (element of a light column) as produced on the photomedia by one energized electrode of Figure 12, for example electrode 141, which opens "half-gates" 148 and 149. One dot element has a height proportional to four times the width of electrodes and spaces assuming they are equal (see Figure 13). Ideally, the dot shown in Figure 17 has a width 106 of approximately 20 microns and an equal height 109. The fact that electrodes arranged as in Figure 12 produce a slanted edge of the dot is of no importance since the protruding corner shown on the right side of the dot 107 is only one electrode width lower than the left side corner divided by the reduction ratio, which, in the embodiment shown represents approximately 5 microns on the photomedia.

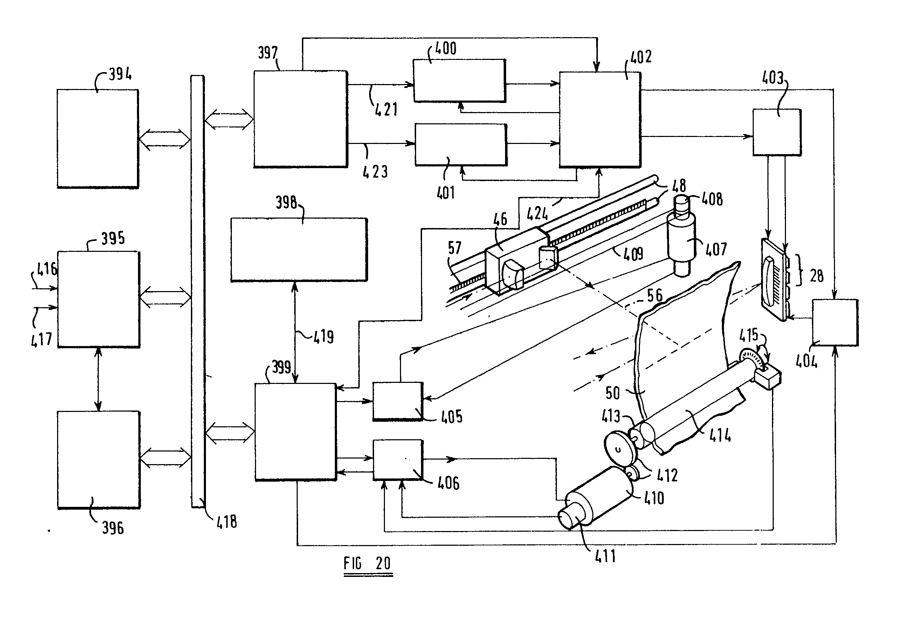

The upper part 108 of Figure 19 represents in the form of block diagrams the major components of the assembly 28 of Figure 10. A shift register shown at 118, is connected to a clock by wire 120 and receives data by wire 122. The latch assembly is represented by block 116 with its controlling input wire 124. Block 114 represents the driver assembly controlling the 256 gates 112-1 to 112-256. Block 110 represents the field inversion control. In the lower part of the Figure, block 128 represents the central processing unit (CPU) which controls all the functions of the machine. It is connected to the major components, such as the information input 126 coming from an external source, to the character generator storage 130, to the photomedia control 134 (for example for film feed), to the block 136 which through electrical or optical (filters) means controls the amount of light that can reach the photosensitive material, and finally to the block 132 representing the character forming, projecting and spacing carriage. Although not shown in the Figure, it is the motion of the carriage which through an encoder or a grating system and associated electronics controls the opening or closing of preselected gates as called for by the character generator.

Another preferred and more detailed embodiment of the electronic controls of the machine described herein is schematically represented in the block diagram of Figure 20. The circuit is controlled by input wires 416 or 417. For example, serial data transmission can be transferred over connection 416 as per the standard known as RS-232. For faster and more complex transfer of information in parallel, connection 417 is utilized, particularly for the transfer to the machine of data pertaining to graphical material, including halftone illustrations. The information coming from outside sources is transferred via the connections referred to above to the main CPU 395 which interprets the information received and organizes the general sequential operations of the machine in order to produce the desired output on the photosensitive media. The main CPU is connected to mass memory 396 where all the necessary data concerning for exaple the shape of alphanumeric characters are stored on disks, PROMS or other mass storage media. For the production of alphanumeric charcters (or other images), the fonts to be utilized during the operation of the machine are transferred to the RAM memory represented by box 394. The main CPU transfers the shapes of images to signal processor 397 (for example Texas Instrument model TMS 32010) which determines the points where the contour of the desired images, for a given size, intersect the background screen to be printed. These informations are transferred by connection 421 and stored in a bit map block 400 so organized that the ON-OFF changes can be identified without any ambiguity. Thus, block 400 represents a bit map of transitions. Its capacity may not be higher than 64 kilobytes representing in the average a 50 mm (2 inch) long line of textual material. This capacity is much smaller than what is generally required (several megabytes) by photocomposers, which is one advantage of the present arrangement. Signal processor 397 can also, via connexion 423, send informations to bit map block 401 of similar capacity which may contain information on screening, shapes, pictorial components, etc. The reading and erasing of the information contained in blocks 400 and 401 is controlled by block 402 which receives through connection 424 pulses originating from carriage assembly 46 as explained above. Unit 402, controlled by processor 397 can operate various logical operations from information received from the bit maps of blocks 400 and 401. For example, logical function NAND enables the output of reversed imagery (white on black background) on an area defined by one of the bit maps. The information serialized by unit 402 are segregated between odd and even and introduced into register 403 which controls the spacial modulator generally represented by reference number 28.

Main CPU 395, taking into account the status of the bit-map blocks, gives the necessary commands for the operation of carriage 46 through CPU 399 dedicated to the command of mechanical functions. If controls the motion of the photoreceptor and all the other functions of the output unit such as: operation of the laser shutter, status of the photoreceptor, media cutter operations, display on information status, instruction keys, motors, etc. The light intensity is also adjusted by this microprocessor so that the light reaching the photosensitive media is independant of the carriage speed. This result is obtained by adjusting the voltage applied to the modulator electrodes. In certain cases, the voltage applied to the modulator depends on the mode of operation, for example in the case of reversed output which generally requires less light intensity to avoid affecting the white (or transparent) areas located on a black background.

In Figure 20, the translating carriage assembly is schematically shown at 46, its rail at 48 and the grating, attached to the frame of the machine at 57, as will be explained in more detail hereunder. A motor 407, integral with a pulley 408 and a band 409 secured to the carriage can translate the latter along rails 48 in either direction under the control of servo mechanism 405. The film (or any other media as defined above) is driven by a motor 410 controlled by servo mechanism 406 which, like servo 405 is itself controlled by CPU 399 whose major purpose is to monitor the mechanical functions of the machine. Film 50 is driven by a drive roller 413 through gearing 412 and motor 410. According to an important feature of preferred embodiments of the invention, an accurate measure of the displacement of the film (or its position) is obtained by a light idler roller 414 driven by the film itself and against which it is pressed by springs (not shown). Idler 414, preferably in the form of a tube, can be coated with a thin high friction material to avoid any slippage between this very light roller in intimate contact with the film so that it rotates very freely around pivots (not shown) and transfers its rotation to an encoder assembly shown at 415. Means, not shown in the Figure and forming no part of the invention are also utilized to ensure the position of the film in its transverse location along the driving rollers and the idler.

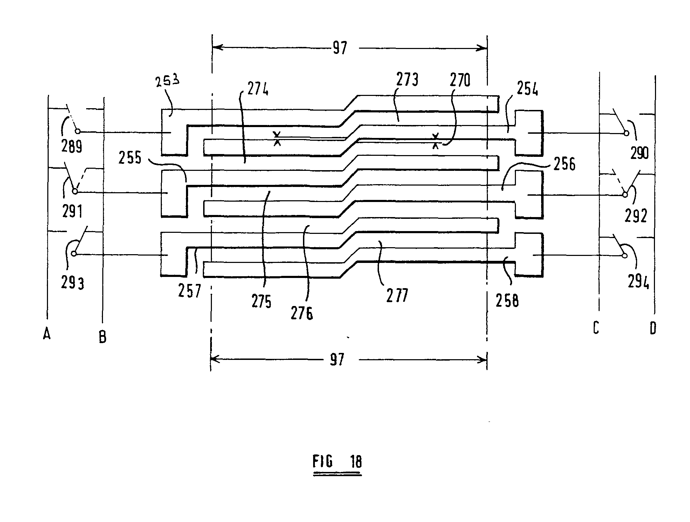

Figure 18 represents a preferred arrangement of the electrodes controlling the gates of the PLZT light modulator. In this arrangement, the electrodes are twice as wide as the electrodes of Figure 12 and the "windows" are also twice was wide. One of the advantages of this arrangement is to increase the distance between consecutive electrodes. It has been found that larger electrodes and larger windows (gate spacing) produce a higher contrast ratio. Thus, in the preferred arrangement, better contrast between "open" and "closed" windows is obtained, with decreased cross-talk and also, because of the wider windows, the divergence of diffracted rays is reduced which leads to smaller imaging optics as well as higher image quality. The arrangement of Figure 18 differs from the interdigital arrangement of Figure 12 in that, as schematically shown in the Figure the "left" electrodes represented by odd reference numbers 253, 255 and 257 are selectively connected to voltage sources "A" or "B" by energization of switches 289, 291 and 293 and the "right" electrodes 254, 256 and 258 can be connected through switches 290, 292 and 294 to voltage sources "C" or "D". In the example of the Figure, window 276 has been "opened" by the simultaneous actuation of switches 293 and 292 which creates an appropriate difference of potential between the electrodes 256 and 293. Experimentally it has been found that by the proper selection of the control voltages, the residual voltage difference between electrodes or unselected gates is of negligible significance and does not create fogging of usual photosensitive material.

To explain the foregoing further, when a voltage $V_1$ is applied to an input electrode such as the electrode 254 in Figure 18, and electrode 253 is grounded, the voltage difference between electrodes 253 and 254 is $V_1$, a voltage sufficient to give an adequate amount of rotation of the polarization plane of light transmitted through the gate 273. However, if electrode 255, which is located on the other side of electrode 254, also were grounded, then the same voltage potential $V_1$ would be established between electrodes 353 and 255, and the gate 274 will be opened inadvertently. To prevent this from happening, there is applied to electrode 255 a voltage $V_2$ which is substantially greater than zero but substantially less than $V_1$, so that the voltage difference between electrodes 255 and 254 is insufficient to create a degree of rotation of the polarization plane adequate to open the gate 274. This same arrangement is used for all of the gates on the wafer.

The way in which the switches of Figure 18 operate to assure independent opening and closing of each gate is that the full voltage $V_1$ is applied only to line D, and the lower voltage $V_2$ (e.g., $\frac{1}{2}$ of $V_1$) is applied to each of lines A and C, while line B is grounded. The switch contacts normally are in the left-most position, where they make contact with lines A or C. When it is desired to open one of the gates, the switch contacts for the electrodes (e.g., 253 and 254) above and below the gate area (e.g., 273) both are moved simultaneously to their right-most positions, where they contact lines B and D, respectively. This grounds one electrode and applies the full voltage $V_1$ to the other, thus opening the gate. In the meantime, the voltage applied to the electrode below electrode 254 is at $\frac{1}{2}V_1$ so that gate 274 does not open and the degree of polarization change is not enough to allow light to leak through and produce fogging of the film.

The proper value of $V_2$ can be selected experimentally. A value of $\frac{1}{2}$ of $V_1$ has proven satisfactory in a machine which has been built and tested.

The width of each window of Figure 18 is twice the width of windows of Figure 12. The electrodes are also shaped to have the same advantage as in Figure 12, that is there is no obstruction caused by interferring electrodes.

Actually, the tops of the right-hand spaces such as 273 and 277 are higher than are the bottoms of the left-hand spaces associated with the adjacent electrode by a distance 270 so that vertically adjacent dots overlap one another slightly to form solid, dark lines on the film. The horizontal spacing of the vertical lines of dots also is selected so that horizontally adjacent dots overlap slightly, for the same purpose.

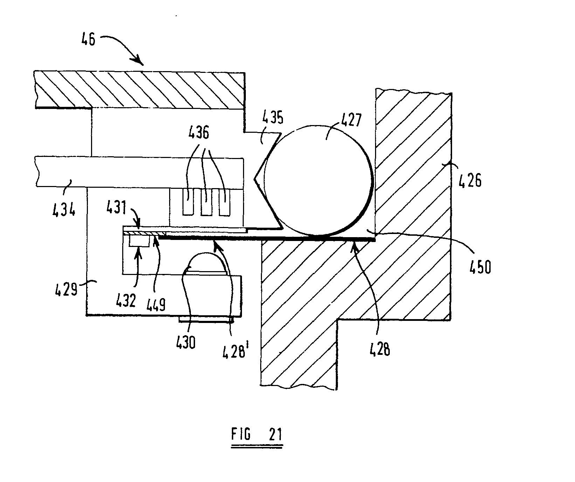

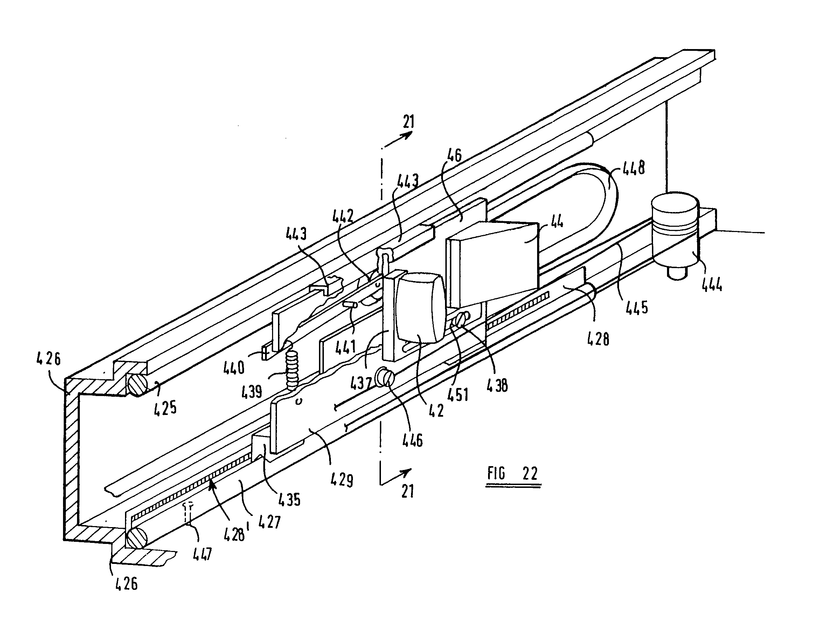

The carriage supporting the moving optics is schematically shown in Figures 21 and 22. In Figure 21, one of the guide rails is shown at 427. According to a feature of preferred embodiments of the invention, these rails are relatively flexible. Their accurate position is obtained by pressing each rail by a spring (not shown) or other means against an accurate angular recess such as 450 located in the rigid frame 426 supporting the translating carriage assembly. The carriage which is very light has a bearing member with a V-shaped groove 435 sitting on rod 427. A flexible film-like grating 428 is secured to the supporting frame 426 by the pressure of rail 427. The flexible grating unit is provided with an extension 428' bearing the actual grating and extending, as shown, between a light-emitting diode (LED) 430, mounted on the frame 429 of the moving carriage, and a multiple-quadrant sensing detector shown at 436, attached to printed circuit 434 also attached to frame 429. Thus, as the carriage is moved along its supporting rails, the LED 430 in cooperation with a mask 431 and the detector assembly 436, creates a series of pulses as the equipment moves along the fixed grating 428'. A small spacer made of PTFE or similar material is located at 449 for the purpose of maintaining the grating at an accurate and fixed distance in relation with the photodetectors assembly. The spacer is attached to the moving carriage part by a fastener shown at 432.

A more complete assembly of the moving optical carriage is shown in Figure 22 where the guiding rails are shown at 425 and 427, secured to the accurate and rigid frame 426 by fasteners such as 447. Sliding V-shaped blocks such as 435, preferably formed of PTFE or similar low-friction material, are attached to the frame of the carriage represented at 46. Mounted on this frame is the mirror 44 attached to a prism-like block, and the lens 42 mounted on a sub-plate 437 which can be adjusted lengthwise by a screw 438 co-operating with a slot 451. The upper part of the sliding carriage is provided with a tapered roller 442 pushed against upper rail 425 by the combined action of lever 440 pivoted at 441 on the carriage frame and extension spring 439. The purpose of this arrangement is to take up any play between the carriage and its rails. Tapered roller 442 tends to push the carriage down against rail 427 as well as laterally against rail 425 through friction blocks 443. The carriage is moved along its rails by a cable 445 cooperating, as shown, with a capstan 444 driven by a motor, not shown in this Figure 22 but shown at 407 in Figure 20. The driving cable is attached to the carriage frame by a screw 446. The grating-supporting flexible strip is shown at 428 and the grating at 428'. Flexible connecting electrical cables are shown at 448.

Preferably, the frame 426 has the shape of an elongated, generally U-shaped metal beam with walls shaped to form the angular recesses 450 into which the rods 425, 427 are secured. A lower channel portion 426¹ (Figure 22) is provided to accommodate the lower parts 430 (Figure 21) etc. of the carriage 46. Surprisingly, an ordinary extruded aluminium beam has sufficient linearity and accuracy to serve as the support 426 for ordinary ground, flexible steel rods used as guide rails 425, 427. This helps to keep the cost of the machine low.

According to another feature of preferred embodiments of the invention, means are provided for accurate alignment of the optical components shown in Figure 2. The supporting means of cylindrical lens 24 are provided to move it vertically up and down as shown by arrows 51 in order to adjust the uniformity of the elongated light beam. Similarly, lens 26 can also be moved vertically as shown by arrows 53 in order to vertically position the elongated light beam. Cylindrical lens 33 can be adjusted in the horizontal plane as shown by arrows 35 to position the elongated light beam at the proper position on light modulator assembly 28. Collimating lens 38 can be positioned on beam 54 as shown by arrows 55 in order to get the exact reduction ratio desired to compensate for the tolerances of the following optical and mechanical components.

**Claims**

1. A photocomposing method for recording information on a photoreceptor (50), comprising illuminating a light modulator (28) provided with a columnar light gate area (29, 77) of coterminous individually controllable gates (148, 149) with a wide-brush laser beam (64), and causing the emerging light beams to produce, on said photoresistor, a thin line-image (72) of activated gates of said columnar light gate area at a reduced scale; characterised by directing all the light beams (65) emerging from the light modulator (28) toward a common point (16) located on the optical axis (15) of an imaging lens (42); moving said imaging lens relative to said photoreceptor in a direction perpendicular to said columnar area and parallel to said photoreceptor at a substantially constant speed along a straight line (54) and selectively activating individual gates of said light modulator in synchronism with the motion of said imaging lens so that characters are formed on said photoreceptor by the juxtaposition of linear images (113) of selected coterminous gates simultaneously projected and spaced on said photoreceptor by the motion of said imaging lens.

2. A method according to claim 1, further characterised in that said emerging light beams are collimated upstream of the imaging lens (42) to form an image on the photoreceptor (50) at an optical distance from said imaging lens substantially equal to its focal length.

3. A method according to claim 1 or 2, further characterised in that the light modulator (28) includes a transparent ceramic wafer (84) provided with a plurality of electrodes (100, 101) to define contiguous light gates (148, 149) and voltages are selectively applied to said electrodes to rotate the polarization plane of light transmitted by said light gates.

4. A method according to claim 3, further characterised in that the ceramic wafer (84) is combined with a reflective surface (85) on one side, positioned in the optical path so that the light (64) entering the modulator (28) reflected along a path slightly angled (81) relative to the entering path whereby the emerging light (65) having crossed the wafer twice, is directed toward the imaging lens (42).

5. A method according to any preceding claim, further characterised in that alphanumeric characters (A) are produced on the phtoreceptor one after another in rapid sequence by activating in succession the gates (148, 149) of the light modulator (28) corresponding to adjacent slices of each character.

6. A method according to any preceding claim, further characterised in that the imaging lens (42) is moved by a carriage system (46) having photodetector means (430—428) moving in unison with it to generate signals for activation of the selected gates of the light modulator.

7. A method according to claim 6, further characterised in that diffracted first order beams (67, 68, 69, 71) emerging from each selected light gate are made to converge by collimation means (38) to a waist (16) located midcourse the maximum travel of the imaging carriage system (46).

8. A method according to any preceding claim, further characterised in that the light beam entering the imaging lens (42) are made asymmetrical by a series of lenses (24, 26, 33, 32) located in the light path upstream and downstream of the light modulator (28).

9. A photocomposing machine for forming lines of images on a photosensitive surface (50), comprising means for forming an elongated laser light beam (64) to illuminate a column of coterminous gates (29, 113) located on a light modulator (28) and means to project images of said gates on said photosensitive surface, characterised by field lens means (62) adjacent to said light modulator causing all zero and first order diffracted light beams (66—71) emerging from said modulator to converge toward a common point (16') located on the virtual image plane of a virtual light source (60') also located on the optical axis (15) of an imaging lens (42); by a collimating lens (38) increasing the convergence of the image-forming light beams by directing them to a common waist (16); by a carriage (46) supporting the imaging lens (42) and a reflector (44); and by means (407) for moving said carriage parallel to said photosensitive surface and to said optical axis (15), said imaging lens and reflector being arranged to intercept said collimated light rays, to reflect them through an angle of 90 degrees, and to focus them on said photosensitive surface to produce an optically reduced image (25, 25') of the column (29, 113) of said light gates.

10. A photocomposing machine according to claim 9, having a predetermined maximum length (43) of said lines and corresponding first and second extreme positions (42', 42) of travel of said imaging lens and reflector, further characterised by said field lens means (62) and said collimating lens (38) being adapted to locate said waist (16) approximately half-way between said extreme positions of travel in order to maintain the spread of light beams entering the imaging lens at a small value so that long lines can be projected through a relatively small imaging lens.

11. A photocomposing machine according to claim 10, further characterised by means to cause said light beams to form a line-image (72) varying in height according to a predetermined program relating said height to the position of said carriage at a given instant, said line-image extending in a direction transverse to the direction of travel of said carriage.

12. A photocomposing machine according to claim 9, 10 or 11, further characterised in that said field lens means (62) cause the light beams (65) emerging from the modulator and located in the plane of said column of coterminous gates to converge toward the imaging lens (42), and cylindrical optics (32) cause the beams (65') emerging from said modulator in a plane perpendicular to said column to slightly diverge before entering said collimating lens (38) in order to improve the resolution of the images produced on said photosensitive surface.

13. A photocomposing machine according to any one of claims 9 to 12, furher characterised in that said light modulator (28) includes a transparent PLZT wafer (84) having a plurality of electrodes (100, 101) defining contiguous light gates (148, 149) capable of rotating the polarization plane of light passing therethrough by selective energizing of said electrodes.

14. A photocomposing machine according to claim 13, further characterised in that the light modulator (28) comprising a reflective surface (85) positioned to cause the light entering the wafer on one side thereof to pass twice therethrough and to emerge on the same side as, but at an angle to, the incident light.—

**Patentansprüche**

1. Verfahren zum photographischen Setzen für das Aufzeichnen von Information auf einen Photorezeptor (50), bei dem ein mit einem säulenförmigen Lichtgatterfeld (29, 77) aus gleich endenden, mittels eines weitaufgefächerten Laserstrahls (64) einzeln steuerbaren Gattern (148, 149) versehener Lichtmodulator (28) beleuchtet wird und bei dem bewirkt wird, daß die austretenden Lichtstrahlen auf dem Photorezeptor ein Dünnlinienbild (72) aktivierter Gatter des säulenförmigen Lichtgatterfeldes auf einer reduzierten Skala erzeugen, dadurch gekennzeichnet, daß alle aus dem Lichtmodulator (28) austretenden Lichtstrahlen (65) auf einen gemeinsamen Punkt (16) gerichtet werden, der auf die optische Achse (15) einer bilderzeugenden Linse (42) gelegt ist, die bilderzeugende Linse in Bezug auf den Photorezeptor in eine Richtung senkrecht zum säulenförmigen Feld und parallel zum Photorezeptor mit einer im wesentlichen konstanten Geschwindigkeit entlang einer geraden Linie (54) bewegt wird und ausgewählt einzelne Gatter des Lichtmodulators im Gleichlauf mit der Bewegung der bilderzeugenden Linse aktiviert werden, so daß auf dem Photorezeptor durch das Nebeneinanderlegen linearer Bilder (113) ausgewählter gleich endender Gatter erzeugt werden, die durch die Bewegung der bilderzeugenden Linse auf dem Photorezeptor gleichzeitig projiziert und mit Abstand voneinander angeordnet werden.

2. Verfahren nach Anspruch 1, weiter dadurch gekennzeichnet, daß die austretenden Lichtstrahlen stromaufwärts der bilderzeugenden Linse (42) parallel ausgerichtet werden, um auf dem Photorezeptor (50) in einem optischen Abstand von der bilderzeugenden Linse, der im wesentlichen gleich deren Brennweite ist, ein Bild zu erzeugen.

3. Verfahren nach Anspruch 1 oder 2, weiter dadurch gekennzeichnet, daß der Lichtmodulator (28) einer keramischen Wafer (84) umfaßt, der mit einer Vielzahl von Elektroden (100, 101) versehen ist, um aneinanderliegende Lichtgatter (148, 149) zu definieren, und Spannungen ausgewählt an die Elektroden gelegt werden, um die Polarisationsebene von durch die Lichtgatter durchgelassenem Licht zu drehen.

4. Verfahren nach Anspruch 3, weiter dadurch gekennzeichnet, daß der keramsiche Wafer (84) mit einer reflektierenden Oberfläche (85) auf einer Seite kombiniert ist, die im optischen Weg so angeordnet ist, daß das in den Modulator (28) eintretende Licht (64) entlang eines Weges unter einem leichten Winkel (81) in Bezug auf den Einfallsweg reflektiert wird, wodurch das austretende Licht (65), nachdem es den Wafer zweimal durchquert hat, auf die bilderzeugende Linse gerichtet wird.

5. Verfahren nach einem der vorangehenden Ansprüche, weiter dadurch gekennzeichnet, daß alphanumerische Zeichen (A) auf dem Photorezeptor eines nach dem anderen in schneller Folge erzeugt werden, indem in Folge die Gatter (148, 149) des Lichtmodulators aktiviert werden, die benachbarten Lagen jedes Zeichens entsprechen.

6. Verfahren nach einem der vorangehenden Ansprüche, weiter dadurch gekennzeichnet, daß die bilderzeugende Linse (42) durch ein Vorschubsystem (46) bewegt wird, welches eine sich mit ihm zusammen bewegende Photodetektoreinrichtung (430—428) zum Erzeugen von Signalem zum Aktivieren der ausgewählten Gatter des Lichtmodulators aufweist.

7. Verfahren nach Anspruch 6, weiter dadurch gekennzeichnet, daß gebrochene Strahlen (67, 68, 69, 71) erster Ordnung, die von jedem ausgewählten Lichtgatter ausgehen, durch eine Kollimiatoreinrichtung (38) zum Konvergieren in einem Sammelpunkt (16) auf der Mitte des Maximalweges des Bild-Vorschubsystems (46) gebracht werden.

8. Verfahren nach einem der vorangehenden Ansprüche, weiter dadurch gekennzeichnet, daß der in die bilderzeugende Linse (42) eintretende Lichtstrahl durch eine Reihe von Linsen (24, 26, 33, 32), die im Lichtweg stromaufwarts und stromabwärts des Lichtmodulators (28) angeordnet sind, asymmetrisch gemacht wird.

9. Vorrichtung zum photographischen Setzen für das Ausbilden von Bildlinien auf einer lichtempfindlichen Oberfläche (50), mit einer Einrichtung zum Bilden eines langgestreckten Laserstrahles (64) zum Belichten einer Säule gleich endender Gatter (29, 113), die auf einem Lichtmodulator (28) angebracht sind, und einer Einrichtung zum Projizieren von Bildern der Gatter auf die lichtempfindliche Oberfläche, gekennzeichnet durch eine benachbart zum Lichtmodulator angeordneten Feldlinseneinrichtung (62), welche bewirkt, daß alle gebrochenen Lichtstrahlen (66—71) nullter und erster Ordnung, die vom Lichtmodulator ausgehen, in einem gemeinsamen Punkt (16') konvergieren, der in der virtuellen Bildebene einer virtuellen Lichtquelle (60') liegt, die ebenfalls auf der optischen Achse (15) einer Bildlinse (42) liegt; durch eine Kollimatorlinse (38), welche die Konvergenz der bilderzeugenden Lichtstrahlen erhöht, indem sie zu einem gemeinsamen Sammelpunkt (16) gelenkt werden; durch ein Vorschubsystem (46), das die Bildlinse (42) trägt, und einen Reflektor (44); und durch eine Einrichtung (407) zum Bewegen des Vorschubsystems parallel zur lichtempfindlichen Oberfläche und zur optischen Achse (15), wobei die Bildlinse und der Reflektor so angeordnet sind, daß die die kollimierten Lichtstrahlen auffangen, um sie um einen Winkel von 90 Grad zu reflektieren und sie auf der lichtempfindlichen Oberfläche zu fokussieren, um ein optisch reduziertes Bild (25, 25') der Säule (29, 113) der Lichtgatter zu erzeugen.

10. Vorrichtung zum photographischen Setzen nach Anspruch 9, mit einer vorbestimmten Maximallänge (43) der Linien und entsprechenden ersten und zweiten Extremstellen (42', 42) der Strecke der Bildlinse und Reflektor, weiter dadurch gekennzeichnet, daß die Feldlinseneinrichtung (62) und die Kollimatorlinse (38) so ausgelegt sind, daß sie den Sammelpunkt (16) etwa auf den halben Weg zwischen die Extremstellen der Strecke legen, um das Aufweiten der in die Bildlinse eintretenden Lichtstrahlen auf einem kleinen Wert zu halten, so daß lange Linien durch eine relativ kleine Bildlinse projiziert werden können.

11. Vorrichtung zum photographischen Setzen nach Anspruch 10, weiter gekennzeichnet durch eine Einrichtung, die bewirkt, daß die Strahlen ein Linienbild (72) bilden, das in der Höhe nach einen vorbestimmten Programm, welches die Höhe zur Stellung des Vorschubsystems zu einem bestimmten Zeitpunkt in Beziehung setzt, variiert, wobei das Linienbild sich in eine Richtung quer zur Bewegung des Vorschubsystems erstreckt.

12. Vorrichtung zum photographischen Setzen nach Anspruch 9, 10 oder 11, weiter dadurch gekennzeichnet, daß die Feldlinseneinrichtung (62) die aus dem Modulator austretenden und in der Ebene der Säule gleich endender Gatter liegenden Lichtstrahlen (65) zum Konvergieren in Richtung auf die Bildlinse (42) bringt und eine Zylinderoptik (32) die aus dem Modulator in der Ebene senkrecht zu der Säule austretenden Lichtstrahlen (65') leicht zum Divergieren bringt, bevor sie in die Kollimatorlinse (38) eintreten, um die Auflösung der auf der lichtempfindlichen Fläche erzeugten Bilder zu verbessern.

13. Vorrichtung zum photographischen Setzen nach einem der Ansprüche 9 bis 12, weiter dadurch gekennzeichnet, daß der Lichtmodulator (28) einem lichtdurchlässigen PLZT-Wafer (84) mit einer Vielzahl von Elektroden (100, 101) umfäßt, welche aneinandergrenzende Lichtgatter (148, 149) definieren, die die Polarisationsebene des durchlaufenden Lichtes durch ausgewähltes Erregen der Elektroden drehen.

14. Vorrichtung zum photographischen Setzen nach Anspruch 13, weiter dadurch gekennzeichnet, daß der Lichtmodulator (28) eine reflektierende Oberfläche (85) aufweist, die so angeordnet ist, daß das auf einer Seite in den Wafer eintretende Licht zweimal hindurchgeleitet wird und auf derselben Seite wie das einfallende Licht, jedoch unter einem Winkel dazu, austritt.

## Revendications

1. Procédé de photocomposition pour l'enregistrement d'informations sur un photorécepteur (50), comprenant les étapes consistant à éclairer un modulateur de lumière (28) muni d'une zone de portes de lumière colonnaire (29, 77) de portes coterminales (148, 149) commandables individuellement avec un faisceau laser (64) à large balayage, et en faisant en sorte que les faisceaux de lumière émergente produisent sur le photorécepteur une image à traits fins (72) des portes activées de la zone de portes de lumière colonnaire à une échelle réduite, caractérisé en ce que l'on dirige tous les faisceaux lumineux (65) émergeant du modulateur de lumière (28) en direction d'un point commun (16) situé sur l'axe optique (15) d'une lentille de formation d'images (42); en ce que l'on déplace la lentille de formation d'images par rapport au photorécepteur dans une direction perpendiculaire à la zone colonnaire et parallèlement au photorécepteur à une vitesse sensiblement constante le long d'une ligne droite (54) et en activant de façon sélective les différentes portes du modulateur de lumière en synchronisation avec le mouvement de la lentille de formation d'images de façon que des caractères se forment sur le photorécepteur par la juxtaposition d'images linéaires (113) de portes coterminales sélectionnées, projetées simultanément et espacées sur le photorécepteur par le mouvement de la lentille de formation d'images.

2. Procédé selon la revendication 1, caractérisé en ce que les faisceaux lumineux émergents sont collimatés en amont de la lentille de formation d'images (42) pour former une image sur le photorécepteur (50) à une distance optique de la lentille de formation d'images sensiblement égale à sa longueur focale.

3. Procédé selon la revendication 1 ou 2, caractérisé de en ce que le modulateur de lumière (28) comprend une pastille en céramique transparente (84) munie de plusieurs électrodes (100, 101) pour définir des portes de lumière contiguës (148, 149) et des tensions sont appliquées sélectivement aux électrodes pour faire tourner le plan de polarisation de la lumière transmise par les portes de lumière.

4. Procédé selon la revendication 3, caractérisé en ce que la pastille en céramique (84) est combinée à une surface réfléchissante (85) sur un côté, positionnée dans la voie optique de façon à réfléchir la lumière (64) pénétrant dans le modulateur (28) réfléchie le long d'une trajectoire légèrement angulaire (81) par rapport à la voie de pénétration, de sorte que la lumière émergente (65) ayant traversé la pastille deux fois, est dirigée vers la lentille de formation d'images (42).

5. Procédé selon l'une quelconque des revendications précédentes, caractérisé en ce que des caractères alphanumériques (A) sont produits les uns à la suite des autres sur le photorécepteur selon une séquence rapide en activant successivement les portes (148, 149) du modulateur de lumière (28) correspondant à des tranches contiguës de chaque caractère.

6. Procédé selon l'une quelconque des revendications précédentes, caractérisé en ce que la lentille de formation d'images (42) est déplacée par un système de chariot (46) ayant des moyens de photodétecteur (430, 428) se déplaçant en synchronisation avec celui-ci pour produire des signaux destinés à activer les portes sélectionnées du modulateur de lumière.

7. Procédé selon la revendication 6, caractérisé en ce que l'on fait converger des faisceaux de premier ordre diffractés (67, 68, 69, 71) émergeant de chaque porte de lumière sélectionnée par des moyens de collimation (38) sur une partie centrale (16) située à mi-parcours de la course maximale du système de chariot de formation d'images (46).

8. Procédé selon l'une quelconque des revendications précédentes, caractérisé en ce que le faisceau de lumière pénétrant dans la lentille de formation d'images (42) est rendu asymétrique par une série de lentilles (24, 26, 33, 32) situées dans la voie de lumière en amont et en aval du modulateur de lumière (28).

9. Machine de photocomposition destinée à former les lignes d'images sur une surface photosensible (50), comprenant des moyens destinés à former un faisceau lumineux laser allongé (64) pour éclairer une colonne de portes coterminales (29, 113) situées sur un modulateur de lumière (28) et des moyens destinés à projeter des images de ces portes sur la surface photosensible, caractérisée par une lentille de champ (62) contiguë au modulateur de lumière faisant converger tous les faisceaux lumineux diffractés égaux à zéro et de premier ordre (66, 71) émergeant du modulateur en direction d'un point commun (16') situé sur le plan d'image virtuelle d'une source de lumière virtuelle (60') également située sur l'axe optique (15) d'une lentille de formation d'images (42); par une lentille de collimation (38) augmentant la convergence des faisceaux lumineux de formation d'images en les dirigeant sur un point central commun (16); par un chariot (46) sur lequel sont montés la lentille de formation d'images (42) et un réflecteur (44); et par des moyens (407) destinés à déplacer le chariot parallèlement à la surface photosensible et à l'axe optique (15), la lentille de formation d'images et le réflecteur étant aptes à intercepter les rayons lumineux collimatés pour les réfléchir à suivant un angle de 90° et pour les focaliser sur la surface photosensible pour produire une image optiquement réduite (25, 25') de la colonne (29, 113) des portes de lumière.

10. Machine de photocomposition selon la revendication 9, présentant une longueur maximale prédéterminée (43) de lignes et des première et seconde positions correspondantes extrêmes (42', 42) de la course de la lentille de formation d'images et du réflecteur, caractérisée par une lentille de champ (62) et une lentille de collimation (38) aptes à localiser la partie centrale (16) approximativement a mi-chemin entre les positions extrêmes de course pour maintenir la diffusion des faisceaux lumineux pénétrant dans la lentille de formation d'images à une faible valeur de façon que des lignes longues puissent être projetée à travers une lentille de formation d'images relativement petite.

11. Machine de photocomposition selon la revendication 10, caractérisée par des moyens faisant en sorte que les faisceaux lumineux forment une image à lignes (72) variant en hauteur selon un programme prédéterminé mettant en relation la hauteur avec la position du chariot à un instant donné, cette image à lignes s'étendant dans une direction transversale à la direction de marche du chariot.

12. Machine de photocomposition selon la revendication 9, 10 ou 11, caractérisée en ce que la lentille de champ (62) fait converger les faisceaux lumineux (65) provenant du modulateur et situés dans le plan de la colonne de portes coterminales en direction de la lentille de formation d'images (42), et des systèmes optiques cylindriques (32) font légèrement diverger les faisceaux (65') provenant du modulateur dans un plan perpendiculaire à la colonne avant de pénétrer dans la lentille de collimation (38) pour améliorer la résolution des images produites sur la surface photosensible.

13. Machine de photocomposition selon l'une quelconque des revendications 9 à 12, caractérisée en ce que le modulateur de lumière (28) comprend une pastille transparente PLZT (84) comportant plusieurs électrodes (100, 101) définissant des portes de lumière contiguës (148, 149) pouvant faire tourner le plan de polarisation de lumière les traversant par la mise sous tension sélective des électrodes.

14. Machine de photocomposition selon la revendication 13, caractérisée en ce que le modulateur de lumière (28) comprend une surface réfléchissante (85) positionnée de façon à faire en sorte que la lumière pénétrant dans la pastille sur un côté de celle-ci la traverse deux fois et sorte du même côté que la lumière incidente, mais selon un certain angle.

EP 0 182 675 B1

PRIOR ART

FIG 1

FIG 19

FIG. 2

FIG. 3

2

FIG 4

3

FIG 5

FIG 7

FIG 6

FIG  9

FIG 11

FIG  8

FIG  10

FIG 13

FIG 12

FIG 15

FIG 14

FIG 16

FIG 17

FIG 18

8

FIG 20

FIG 21

10

FIG 22